(19) Europäisches Patentamt
European Patent Office
Office européen des brevets

(11) **EP 4 073 465 B1**

(12) **FASCICULE DE BREVET EUROPEEN**

(45) Date de publication et mention de la délivrance du brevet:
**20.11.2024 Bulletin 2024/47**

(21) Numéro de dépôt: **20816524.1**

(22) Date de dépôt: **07.12.2020**

(51) Classification Internationale des Brevets (IPC):
**G01C 21/16** (2006.01)

(52) Classification Coopérative des Brevets (CPC):
**G01C 21/1652**

(86) Numéro de dépôt international:
**PCT/EP2020/084817**

(87) Numéro de publication internationale:
**WO 2021/115993 (17.06.2021 Gazette 2021/24)**

(54) **FILTRAGE PARTICULAIRE ET CENTRALE DE NAVIGATION A CORRELATION DE MESURE**

TEILCHENFILTERUNGSVERFAHREN UND NAVIGATIONSSYSTEM MIT MESSKORRELATION

PARTICLE FILTERING METHOD AND NAVIGATION SYSTEM USING MEASUREMENT CORRELATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.12.2019 FR 1914339**

(43) Date de publication de la demande:
**19.10.2022 Bulletin 2022/42**

(73) Titulaire: **Office National d'Etudes et de Recherches Aérospatiales**
**91120 Palaiseau (FR)**

(72) Inventeurs:
• **MERLINGE, Nicolas**
**91120 PALAISEAU (FR)**
• **AUDEBERT, Clément**
**92600 ASNIERES (FR)**
• **DAHIA, Karim**
**91120 PALAISEAU (FR)**

• **HERISSE, Bruno**
**91120 PALAISEAU (FR)**
• **ALLARD, Jean-Michel**
**91120 PALAISEAU (FR)**

(74) Mandataire: **Hautier IP**
**20, rue de la Liberté**
**06000 Nice (FR)**

(56) Documents cités:
**WO-A1-2018/002932      FR-A1- 2 832 796**

• **NICOLAS MERLINGE ET AL: "A Box Regularized Particle Filter for state estimation with severely ambiguous and non-linear measurements", AUTOMATICA, vol. 104, 12 March 2019 (2019-03-12), AMSTERDAM, NL, pages 102 - 110, XP055664432, ISSN: 0005-1098, DOI: 10.1016/j.automatica.2019.02.033**

## Description

### Domaine technique

La présente invention concerne un procédé de filtrage particulaire, ainsi qu'une unité de calcul et une centrale de navigation à corrélation de mesure qui mettent en oeuvre un tel procédé. Plus particulièrement, le procédé de filtrage particulaire est du type régularisé à boîtes.

### Technique antérieure

La fonction de navigation d'un aéronef inclut l'estimation de sa position instantanée, sa vitesse instantanée et son orientation instantanée, appelée attitude, dans le référentiel de navigation, aussi appelé trièdre géographique local. L'ensemble des valeurs instantanées des coordonnées de position, c'est-à-dire la latitude, la longitude et l'altitude de l'aéronef, de vitesse, comprenant une coordonnée de vitesse en direction du Nord, une coordonnée de vitesse en direction de l'Est et une coordonnée de vitesse de descente, et des angles d'attitude de l'aéronef, comprenant un angle de roulis, un angle de tangage et un angle de lacet, constitue l'état instantané du système formé par l'aéronef. L'aéronef peut être un avion, un drone ou tout porteur aérien autopropulsé, sans limitation.

L'accélération et la vitesse angulaire de l'aéronef sont mesurées répétitivement et à haute cadence chacune selon trois axes, par exemple à une fréquence de répétition d'environ 1000 Hz (Hertz), à l'aide d'accéléromètres et de gyromètres d'une centrale inertielle qui est à bord de l'aéronef. La centrale de navigation délivre alors des estimations des coordonnées de position et de vitesses, et des angles d'attitude de l'aéronef, par intégration des résultats des mesures accélérométriques et gyrométriques au cours du temps. Toutefois, chaque mesure d'accélération et de vitesse angulaire est affectée d'une erreur, qui est principalement composée d'un biais, d'un facteur d'échelle et d'un processus aléatoire, et l'accumulation des erreurs de mesure résulte en une erreur qui affecte l'estimation de l'état instantané de l'aéronef. Cette erreur sur l'état instantané qui est estimé croît en fonction du temps, et est couramment appelée dérive inertielle. Il est alors nécessaire d'associer la centrale inertielle à au moins un capteur additionnel, afin de corriger ou réduire la dérive inertielle.

Des méthodes usuelles pour corriger ou réduire la dérive inertielle consistent à utiliser des signaux de géolocalisation, tels que des signaux de navigation par satellite, par exemple de type GNSS, pour «global navigation satellite système en anglais, ou d'utiliser des signaux qui sont produits par des balises situées au sol, par exemple des signaux de radionavigation ou de type GBAS, pour «ground-based augmentation system» ou système de renforcement au sol, ou encore de recevoir par radio une localisation de l'aéronef qui a été effectuée à l'aide d'un radar. Mais de telles méthodes sont sensibles à des brouillages ou à des leurres, à la disponibilité d'une couverture de la zone où se trouve l'aéronef en signaux de localisation ou en communication, etc. Il est alors souhaitable dans certaines circonstances de disposer à bord de l'aéronef d'une méthode qui soit autonome pour corriger et/ou réduire la dérive inertielle. Pour cela, il est courant d'associer à la centrale inertielle une sonde télémétrique, qui mesure une distance entre l'aéronef et le sol. Cette sonde télémétrique peut être un radio-altimètre, un télémètre laser, etc. sans limitation. Elle mesure la distance entre l'aéronef et le sol selon une direction qui peut être fixe ou non par rapport à l'aéronef. Lorsque cette direction de mesure de distance peut être variable, son orientation par rapport à l'aéronef est connue. La centrale inertielle est alors aussi associée à une unité de calcul qui corrèle des résultats de mesures successives qui sont effectuées par la sonde télémétrique avec l'état instantané de l'aéronef tel qu'estimé par la centrale inertielle. Plus précisément, une caractérisation de la zone qui est survolée par l'aéronef est stockée à bord de l'aéronef, par exemple sous forme d'une carte de relief qui associe une valeur de hauteur de relief à chaque couple de valeurs de latitude et de longitude. Un tel enregistrement de carte de relief peut être sous la forme d'une table, avec la latitude et la longitude qui constituent les entrées de la table, et les valeurs de hauteur du relief qui constituent les réponses de lecture dans la table. Alternativement, la caractérisation de la zone survolée peut être stockée sous forme d'une fonction analytique qui permet de calculer les valeurs de hauteur de relief en fonction des valeurs de latitude ou de longitude, ou sous toute autre forme appropriée. Alors, à chaque nouvelle estimation de la position instantanée de l'aéronef qui est produite par la centrale de navigation, une valeur de la distance qui devrait exister entre l'aéronef et le sol est obtenue en interrogeant la caractérisation de la zone survolée telle que stockée à bord de l'aéronef, conformément à la position estimée de l'aéronef. Eventuellement, la valeur de distance aéronef-sol peut résulter d'un calcul qui combine la position estimée de l'aéronef avec le(s) résultat(s) d'une ou plusieurs interrogation(s) de la caractérisation de la zone survolée qui est stockée à bord de l'aéronef, notamment lorsque la direction de mesure de la sonde télémétrique est oblique par rapport à l'axe d'altitude. Un tel calcul est connu de l'Homme du métier, si bien qu'il n'est pas utile de le répéter ici. La valeur de distance aéronef-sol qui est ainsi estimée est ensuite comparée avec le résultat de mesure qui est délivré par la sonde télémétrique. Une telle méthode de navigation avec corrélation de mesure est couramment appelée navigation avec corrélation de terrain. Plusieurs variantes en ont été proposées, mais certaines d'entre elles présentent une grande sensibilité à l'existence de non-linéarités des profils de terrain. Autrement dit, elles présentent l'inconvénient d'un manque de robustesse dans leur efficacité de convergence vers l'état vrai de l'aéronef, en fonction des profils de terrain possibles.

Les méthodes de navigation à corrélation de terrain qui sont basées sur un filtre particulaire régularisé à boîtes, ou BRPF pour «Box Regularized Particle Filter» en anglais, permettent de corriger la dérive inertielle avec une robustesse plus grande, compatible avec l'existence de non-linéarités et d'ambiguïtés de terrain. L'article de Merlinge, N., Dahia, K., Piet-Lahanier, H., Brusey, J., & Horri, N. qui est intitulé «A Box Regularized Particle Filter for state estimation with severely ambiguous and non-linear measurements», Automatica (2019), Vol. 104, pp. 102-110, décrit une telle méthode. Chacune de ces méthodes consiste encore à calculer itérativement un état instantané de l'aéronef à partir d'un dernier état déterminé antérieurement, et à corréler le résultat de mesure de distance qui est obtenu par la sonde télémétrique avec une valeur de distance qui est reconstituée par ailleurs à partir de la caractérisation du relief terrestre embarquée à bord de l'aéronef et des valeurs de position et d'attitude. Mais, un filtre particulaire régularisé à boîtes procède en manipulant des intervalles d'état, de dimension neuf lorsque chaque état de l'aéronef est constitué par trois coordonnées de position, trois coordonnées de vitesse et trois angles d'attitude comme décrit plus haut. De plus, une valeur de poids à signification probabiliste est associée à chaque intervalle d'état : le poids de chaque intervalle d'état correspond à la probabilité pour que l'état vrai de l'aéronef se situe dans cet intervalle d'état. Toutefois, ces méthodes de navigation avec corrélation de terrain qui sont basées sur des filtres particulaires n'ont pas encore été mises en oeuvre pour des aéronefs réels, à cause des ressources de calcul très importantes qui sont nécessaires. En effet, il est requis pour de nombreuses applications aéronautiques que le procédé de navigation à corrélation de terrain qui est utilisé puisse être mis en oeuvre par une unité de calcul de type circuit à réseau de portes programmables, ou FGPA pour «Field-Programmable Gate Array» en anglais. Or les circuits de ce type ont des capacités qui sont encore trop limitées.

De façon connue, un procédé de filtrage particulaire régularisé à boîtes comprend au moins une exécution d'une séquence qui inclut les étapes suivantes :

/1/ une étape de prédiction, comprenant de prédire des intervalles d'état ultérieurs, chaque intervalle d'état ultérieur étant obtenu en appliquant au moins une règle de propagation à un d'une pluralité d'intervalles d'état antérieurs, chaque intervalle d'état étant possiblement multidimensionnel ;

121 une étape de mesure de l'état vrai ;

/3/ une étape de contraction de l'un au moins des intervalles d'état ultérieurs, en fonction d'au moins un résultat de mesure de l'état vrai qui a été obtenu à l'étape /2/ ;

/4/ une étape de mise-à-jour de poids, comprenant d'affecter un poids à chaque intervalle d'état ultérieur en fonction d'une taille de cet intervalle d'état ultérieur tel que résultant de l'étape /3/, d'une taille du même intervalle d'état ultérieur tel que résultant de l'étape /1/ avant l'étape /3/, et d'un poids de l'intervalle d'état antérieur dont a résulté cet intervalle d'état ultérieur lors de l'étape /1/ ; et

/5/ une étape de redistribution des intervalles d'état ultérieurs, comprenant de remplacer au moins un des intervalles d'état ultérieurs i par $n_i$ sous-intervalles provenant d'une division de l'intervalle d'état ultérieur i, i étant un indice entier de numérotation des intervalles d'état ultérieurs, et ni étant un nombre des sous-intervalles qui remplacent cet intervalle d'état ultérieur i, chaque sous-intervalle étant destiné à constituer un intervalle d'état antérieur pour une itération ultérieure de la séquence des étapes /1/ à /5/.

Ces étapes comprennent divers calculs, dont certains nécessitent des ressources de calcul importantes. Tel est le cas en particulier de celles des étapes précédentes qui nécessitent de calculer un résultat d'une fonction du type $X^\alpha$, où X est une variable dont la valeur change entre des exécutions différentes de l'étape, et $\alpha$ est un exposant non nul dont la valeur est constante pour toutes les exécutions de la même étape. Pour cette raison, le procédé de filtrage particulaire régularisé à boîtes n'est pas compatible avec une mise en oeuvre à bord d'un véhicule autonome. Notamment, il ne peut pas être mis en oeuvre par une unité de calcul du type FGPA.

Le document WO 2018/002932 décrit un procédé pour déterminer la position d'un véhicule par rapport à une voie de circulation, qui est basé sur des images saisies de sources lumineuses, et qui utilise un algorithme de filtrage particulaire.

Le document FR 2 832 796 décrit une centrale de navigation à corrélation de terrain pour aéronefs.

**Problème technique**

A partir de cette situation, un but de la présente invention est d'optimiser l'utilisation d'un filtre particulaire régularisé à boîtes, notamment pour que ce filtre puisse être mis en oeuvre à bord d'un aéronef. Au-delà, l'invention a pour but de contribuer à ce qu'un procédé de filtrage particulaire régularisé à boîtes puisse être mis en oeuvre par un circuit de type FPGA.

**Résumé de l'invention**

Pour atteindre l'un au moins de ces buts ou un autre, un premier aspect de l'invention propose un procédé de filtrage particulaire à boîtes pour prédire un état d'un système, qui comprend les étapes /1/ à /5/ mentionnées ci-dessus, et dans lequel l'une au moins des étapes /1/, /3/ à /5/ comprend au moins un calcul d'une estimation de la valeur de $X^\alpha$, où X est un nombre variable pour chaque exécution de l'étape et $\alpha$ est une valeur d'exposant non-nulle qui est constante entre des exécutions différentes de l'étape, le nombre X étant positif si l'exposant $\alpha$ n'est pas un nombre entier et non-nul si l'exposant $\alpha$ est négatif. Le système concerné peut être un véhicule terrestre, aérien, maritime ou spatial qui est muni d'une centrale de navigation à corrélation de mesure. Le calcul de l'estimation de la valeur de $X^\alpha$ comprend les étapes suivantes :

/a/ d'écrire le nombre X sous une forme $X = \pm(1+m)\cdot 2^{ex}$, où ex est un nombre entier négatif, positif ou nul, et m est une mantisse comprise entre 0 et 1, la valeur 0 et étant permise, de sorte qu'une représentation binaire du nombre X soit :

$I(X) = L(m + ex + B)$, où $L = 2^n$ avec n qui est un nombre de bits d'une écriture binaire de la mantisse m, et B est un nombre constant positif ou nul, appelé biais ;

/b/ de calculer une représentation binaire de $X^\alpha$ sous la forme :

$I(X^\alpha) = \alpha\cdot I(X) + L\cdot(1 - \alpha)(B - \sigma)$, où $\sigma$ est un nombre constant dont la valeur est enregistrée ; et

/c/ d'obtenir l'estimation de la valeur de $X^\alpha$ à partir de la représentation binaire $I(X^\alpha)$.

Un tel calcul, qui remplace l'estimation de la fonction de $X^\alpha$ par un calcul basé sur la représentation binaire du nombre X, est particulièrement économique en ressources de calculs, et court en temps de calcul. En outre, il peut être réalisé par un circuit du type FPGA.

Dans des modes particuliers de mise en oeuvre de l'invention, l'étape du procédé de filtrage particulaire régularisé à boîtes qui comprend le calcul de l'estimation de la valeur de $X^\alpha$ peut être l'étape /5/, notamment une sous-étape cette l'étape /5/ qui consiste à calculer une valeur de norme d'une partie d'un intervalle d'état ultérieur du système. Cette partie d'intervalle d'état ultérieur du système peut être un intervalle de position du système, un intervalle de vitesse du système ou un intervalle d'attitude du système. Alternativement ou en plus, le calcul de l'estimation de la valeur de $X^\alpha$ peut faire partie d'une autre sous-étape de l'étape /5/, qui consiste à appliquer un lissage par noyau de probabilité aux sous-intervalles pour obtenir les intervalles d'état antérieurs de l'itération ultérieure de la séquence des étapes /1/ à /5/. Le calcul objet de l'invention peut donc être utilisé d'une part pour la valeur de norme d'une partie de l'intervalle d'état ultérieur du système, et par ailleurs pour appliquer le lissage par noyau de probabilité.

De façon générale pour l'invention, et notamment pour obtenir une estimation plus exacte de la valeur de $X^\alpha$, le calcul de l'estimation de la valeur de $X^\alpha$ peut comprendre en outre d'exécuter au moins une fois l'étape supplémentaire suivante :

/d/ calculer une nouvelle estimation de la valeur de $X^\alpha$ à partir d'une estimation antérieure de la valeur de $X^\alpha$, en appliquant un algorithme récursif de résolution approchée d'équation à l'équation $Y^{1/\alpha} - X = 0$ d'inconnue Y, l'estimation de la valeur de $X^\alpha$ qui a été obtenue à l'étape /c/ étant utilisée comme estimation antérieure pour une première application de l'algorithme, et la nouvelle estimation de la valeur de $X^\alpha$ qui est produite par une $q^{ième}$ application de l'algorithme formant l'estimation antérieure de la valeur de $X°$ pour la $(q+1)^{ième}$ application de l'algorithme, si une telle $(q+1)^{ième}$ application de l'algorithme est effectuée, q étant un nombre entier supérieur ou égal à 1.

Pour un tel perfectionnement de l'invention, l'algorithme récursif de résolution approchée d'équation qui est utilisé à l'étape /d/ peut être la méthode de Newton, ou bien un autre algorithme équivalent ou qui remplit la même fonction.

Dans des modes préférés de mise en oeuvre de l'invention, l'une au moins des caractéristiques additionnelles suivantes peut être reproduite optionnellement, seule ou en combinaison de plusieurs d'entre elles :

- le nombre n des bits de l'écriture binaire de la mantisse m peut être égal à 23, et le biais B peut être égal à 127. Alternativement, le nombre n peut être égal à 52 bits et le biais B égal 1023 ;
- le nombre constant $\sigma$ peut être compris entre 0 et 1, de préférence compris entre 0 et 0,5 ; et
- la valeur d'exposant $\alpha$ peut être égale à +2, -2, +1/2 ou -1/2, en particulier.

Un deuxième aspect de l'invention propose une unité de calcul, cette unité de calcul comprenant au moins une première entrée qui est adaptée pour recevoir des résultats de mesures répétées d'accélération et de vitesse angulaire d'un système, et une seconde entrée qui est adaptée pour recevoir des résultats de mesures répétées d'un état vrai du système, supplémentaires par rapport aux mesures d'accélération et de vitesse angulaire. L'unité de calcul est alors agencée pour exécuter un procédé de filtrage particulaire régularisé à boîtes qui est conforme au premier aspect de l'invention. De cette façon, l'unité de calcul produit en sortie une série d'intervalles d'état avec des poids respectifs, le poids qui est associé à chacun des intervalles d'état correspondant à une valeur de probabilité pour que l'état vrai du système soit dans cet intervalle d'état.

Une telle unité de calcul peut être de l'un des types suivants :

- circuit à réseau de portes programmables, ou FPGA,
- circuit à réseau de portes fixes, connu sous l'acronyme DSP pour «Digital Signal Processor» en anglais, et
- processeur d'unité centrale, connu sous les acronymes CPU pour «Computer Processing Unit» ou RISC pour «Reduced Instruction set Computer».

Un troisième aspect de l'invention concerne une centrale de navigation à corrélation de mesure, qui est adaptée pour être embarquée à bord d'un véhicule et qui comprend :

- une centrale inertielle, qui est adaptée pour mesurer itérativement des accélérations et des vitesses angulaires du véhicule, et pour déduire en utilisant des résultats de mesures des accélérations et des vitesses angulaires, des intervalles d'état ultérieurs respectivement à partir de plusieurs intervalles d'état antérieurs, chaque état du véhicule comprenant des coordonnées de position, de vitesse et d'attitude de ce véhicule ;
- un système de mesure, qui est adapté pour mesurer itérativement au moins une caractéristique d'un état vrai du véhicule ; et
- une unité de calcul qui est conforme au deuxième aspect de l'invention, et qui est adaptée pour réduire au moins une dérive de position, de vitesse et/ou d'attitude de la centrale inertielle, en utilisant les résultats de mesure de la caractéristique de l'état vrai du véhicule qui sont délivrés par le système de mesure.

Enfin, un quatrième aspect de l'invention propose un véhicule qui comprend une centrale de navigation à corrélation de mesure conforme au troisième aspect de l'invention. Un tel véhicule peut être un aéronef, notamment un avion, un drone volant ou tout porteur aérien autopropulsé, ou un véhicule capable de se déplacer sur un sol, notamment un drone mobile sur sol, ou un navire, un sous-marin, un engin spatial, notamment une sonde spatiale, un satellite, etc. sans limitation. Selon le cas, le système de mesure peut être une sonde télémétrique qui est destinée à mesurer une distance entre le véhicule et un point de sol, un système de repérage d'amères ou d'étoiles, un sonar pour mesurer une hauteur d'eau sous le navire ou le sous-marin, etc.

**Brève description des figures**

Les caractéristiques et avantages de la présente invention apparaîtront plus clairement dans la description détaillée ci-après d'exemples de mise en oeuvre non-limitatifs, en référence aux figures annexées parmi lesquelles :

[Fig. 1] montre un aéronef qui est équipé d'une centrale inertielle à corrélation de terrain conforme à l'invention ;
[Fig. 2] est un diagramme qui montre l'enchaînement d'étapes d'un procédé conforme à l'invention ; et
[Fig. 3] est un organigramme d'un algorithme qui peut être utilisé pour mettre en oeuvre l'invention.

**Description détaillée de l'invention**

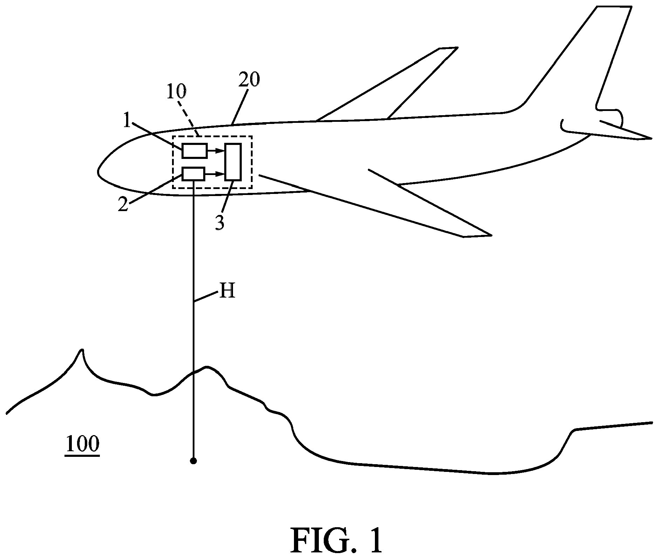

Pour raison de clarté, les dimensions des éléments qui sont représentés symboliquement dans [Fig. 1] ne correspondent ni à des dimensions réelles, ni à des rapports de dimensions réels. En outre, l'invention est décrite à titre d'exemple non-limitatif pour un cas d'application à un aéronef, mais il est entendu qu'elle peut être appliquée à tout véhicule qui est muni d'une centrale de navigation à corrélation de mesure, que ce véhicule soit terrestre, aérien, maritime, spatial, etc.

Le mode de calcul d'une estimation de la valeur de $X^\alpha$ qui est utilisé dans l'invention est décrit dans un premier temps. $\alpha$ désigne un exposant qui est non-nul, dont la valeur est constante. X est un nombre de valeur variable, qui est positif lorsque la valeur de l'exposant $\alpha$ n'est pas un nombre entier, et non-nul lorsque la valeur de l'exposant $\alpha$ est négative.

De façon connue, le nombre X peut être écrit de façon unique sous la forme suivante, conformément à la norme IEEE 754 :

$$X = \pm(1+m)\cdot 2^{ex},$$

où ex est un nombre entier positif ou nul, et m est une mantisse comprise entre 0 et 1, la valeur 0 étant aussi permise. Le nombre ex et la mantisse m dépendent ainsi de la valeur du nombre X.

Alors, lorsque X est positif, on a :

$$\log_2 X = ex + m + \sigma,$$

où $\sigma$ est un nombre réel fixe permettant de minimiser une erreur sur la valeur de $\log_2 X$, notamment lorsqu'un intervalle numérique d'appartenance est connu a priori pour le nombre X. Par exemple, la valeur du nombre $\sigma$ peut être prise égale à 0,043036. Et donc :

$$ex + m = \log_2 X - \sigma.$$

Par ailleurs, le nombre X peut être représenté en forme binaire par I(X) défini par :

$$I(X) = L \cdot (m + ex + B),$$

où $L = 2^n$, avec n qui est un nombre de bits fixé pour écrire la mantisse m sous forme binaire, et B est un nombre constant positif ou nul, qui est appelé biais. Le biais B a pour rôle de permettre d'utiliser une représentation du type I(X) aussi pour des valeurs négatives du nombre X. Dans la représentation I(X) du nombre X, L, m, ex et B sont exprimés sous forme binaire. Par exemple, n peut être égal à 23, et B peut être égal à 127. Pour avoir une précision de calcul qui soit supérieure, n peut alternativement être égal à 52, et dans ce cas B peut être égal à 1023. En reportant dans la représentation binaire I(X) l'expression de ex + m telle que provenant de $\log_2 X$, il vient :

$$I(X) = L \cdot [\log_2 X - \sigma + B], \text{ soit : } \log_2 X = I(X)/L + \sigma - B.$$

Or, de la même façon que I(X) dans la ligne précédente, la représentation binaire de X° est :

$$I(X^\alpha) = L \cdot [\log_2(X^\alpha) - \sigma + B]$$

Mais $\log_2(X^\alpha) = \alpha \cdot \log_2(X)$, donc : $I(X^\alpha) = L \cdot [a \cdot \log_2(X) - \sigma + B]$, et en remplaçant $\log_2(X)$ par son expression en fonction de la représentation binaire I(X), il vient :

$$I(X^\alpha) = L \cdot [\alpha \cdot (I(X)/L + \sigma - B) - \sigma + B], \text{ soit : } I(X^\alpha) = \alpha \cdot I(X) + L \cdot (1 - \alpha) \cdot (B - \sigma).$$

Une valeur approchée de $X^\alpha$, notée Ya, peut alors être reconstruite à la partir de la représentation binaire de $X^\alpha$ qui a été ainsi obtenue, en utilisant une méthode inverse de celle qui fournit la représentation binaire d'un nombre à partir de ce nombre. L'écart entre cette valeur approchée $Y_0$ et la vraie valeur de $X^\alpha$ dépend de la valeur qui a été adoptée pour le nombre $\sigma$. Lorsque X peut être négatif et que la valeur de l'exposant $\alpha$ est entière, le signe de $X^\alpha$ peut être déterminé en fonction de celui de X, retenu depuis le début du procédé de calcul, et de la parité de l'exposant $\alpha$. Pour de nombreuses applications, la valeur approchée $Y_0$ convient d'une manière satisfaisante pour remplacer $X^\alpha$, compte tenu de la simplicité du procédé d'obtention de cette valeur approchée Ya, tel qu'il vient d'être décrit.

Pour le cas particulier où l'exposant $\alpha$ est égal à 2 :

$$I(X^2) = 2 \cdot I(X) - L \cdot (B - \sigma).$$

Pour le cas particulier où l'exposant $\alpha$ est égal à -2 :

$$I(X^{-2}) = -2 \cdot I(X) + 3 \cdot L \cdot (B - \sigma).$$

Pour le cas particulier où l'exposant $\alpha$ est égal à 1/2 :

$$I(X^{1/2}) = I(X)/2 + 0{,}5 \cdot L \cdot (B - \sigma).$$

Pour le cas particulier où l'exposant $\alpha$ est égal à -1/2 :

$$I(X^{-1/2}) = -I(X)/2 + 1,5 \cdot L \cdot (B - \sigma).$$

Pour des applications où la valeur approchée $Y_0$ ne constitue pas une évaluation suffisamment précise de $X^\alpha$, il est possible d'améliorer cette évaluation en utilisant l'un des procédés d'affinage de valeurs approchées qui sont connus de l'Homme du métier. L'algorithme de Newton, aussi appelé méthode de Newton, peut être utilisé en particulier, en l'appliquant à la fonction $f(Y) = Y^{1/\alpha} - X$ et à l'équation $f(Y) = 0$. Des valeurs approchées successives $Y_q$, q étant un indice entier de numérotation de ces valeurs, peuvent ainsi être obtenues selon la formule : $Y_{q+1} = Y_q - f(Y_q)/f'(Y_q)$, où $f'(Y_q)$ est la valeur de la fonction dérivée de f, estimée pour la valeur $Y_q$. C'est-à-dire, en calculant l'expression de $f'(Y)$ à partir de celle de $f(Y)$ :

$$Y_{q+1} = (1 - \alpha) \cdot Y_q + \alpha \cdot X \cdot Y_q^{(\alpha-1)/\alpha}, \text{ pour } q = 0, 1, 2, \ldots$$

Pour le cas particulier où l'exposant $\alpha$ est égal à 2, il vient :

$$Y_{q+1} = -Y_q + 2 \cdot X \cdot Y_q^{1/2}.$$

Notamment, la valeur approchée au premier ordre de $X^2$ est :

$$Y_1 = -Y_0 + 2 \cdot X \cdot Y_0^{1/2}.$$

La valeur de $Y_q^{1/2}$ peut être estimée chaque fois en utilisant la formule $I(X^\alpha) = \alpha \cdot I(X) + L (1 - \alpha)(B - \sigma)$, et en remplaçant dans cette formule X par $Y_q$ et $\alpha$ par 1/2.
Pour le cas particulier où l'exposant $\alpha$ est égal à -2, il vient :

$$Y_{q+1} = 3 \cdot Y_q - 2 \cdot X \cdot Y_q^{3/2}.$$

Notamment, la valeur approchée au premier ordre de $X^{-2}$ est :

$$Y_1 = 3 \cdot Y_0 - 2 \cdot X \cdot Y_0^{3/2}.$$

La valeur de $Y_q^{3/2}$ peut être estimée chaque fois en utilisant encore la formule $I(X^\alpha) = \alpha \cdot I(X) + L (1 - \alpha)(B - \sigma)$, et en remplaçant dans cette formule X par $Y_q$ et $\alpha$ par 3/2.
Pour le cas particulier où l'exposant $\alpha$ est égal à 1/2, il vient :

$$Y_{q+1} = 0,5 \cdot Y_q + 0,5 \cdot X/Y_q.$$

Notamment, la valeur approchée au premier ordre de $X^{1/2}$ est :

$$Y_1 = 0,5 \cdot Y_0 + 0,5 \cdot X/Y_0.$$

Pour le cas particulier où l'exposant $\alpha$ est égal à -1/2, il vient :

$$Y_{q+1} = (3/2) \cdot Y_q - 0,5 \cdot X \cdot Y_q^3.$$

Notamment, la valeur approchée au premier ordre de $X^{-1/2}$ est :

$$Y_1 = (3/2) \cdot Y_0 - 0,5 \cdot X \cdot Y_0^3.$$

La valeur approchée $Y_0$, telle qu'obtenue en utilisant les représentations binaires de nombres, et les valeurs $Y_{q,\ q \geq 1}$, telles qu'obtenues en utilisant l'un des procédés d'affinage de valeurs approchées tel que la méthode de Newton, ne nécessitent pas de ressources de calcul importantes. Elles peuvent donc être calculées facilement par une unité de calcul de type FPGA, DSP, CPU ou RISC.

Conformément à [Fig. 1], un aéronef 20 est équipé d'une centrale de navigation à corrélation de terrain, désignée par la référence 10. La centrale de navigation 10 comprend une centrale inertielle 1, une sonde télémétrique 2 et une unité de calcul 3. De façon connue, la centrale inertielle 1 réalise répétitivement des mesures de trois coordonnées d'accélération et de trois coordonnées de vitesse angulaire de l'aéronef 20, à l'aide d'accéléromètres et de gyromètres non-représentés. Par ailleurs, la sonde télémétrique 2 réalise répétitivement des mesures de la distance H qui existe entre le sol 100 et l'aéronef 20. Cette distance H est mesurée selon une direction qui peut être fixe par rapport à l'aéronef 20, par exemple perpendiculairement à un plan de référence de l'aéronef. Eventuellement, la direction de mesure télémétrique peut être variable par rapport à l'aéronef 20, mais dans un tel cas cette direction de mesure est contrôlée et prise en compte d'une façon adéquate, connue par ailleurs. La distance H varie donc en fonction du relief terrestre qui est survolé par l'aéronef 20, ainsi qu'en fonction de son altitude et de son attitude. Dans la suite, la présente description est limitée au seul cas où les mesures supplémentaires par rapport à celles de la centrale inertielle 1 sont constituées par les mesures de la distance H. Ce cas correspond à une navigation avec corrélation de terrain. Toutefois, il est entendu que d'autres mesures supplémentaires peuvent être utilisées alternativement à celles de la distance H, ou en complément de celles-ci. Enfin, l'invention est compatible avec des modèles de centrale inertielle et de sonde télémétrique tels que disponibles commercialement. En particulier, la centrale inertielle peut être d'un type à MEMS, pour «Micro-Electro-Mechanical System» en anglais, à quadrason, à gyrolaser, etc., et la sonde télémétrique peut être un radio-altimètre, un télémètre laser, etc.

Chaque état possible pour l'aéronef 20 peut être composé de trois valeurs de coordonnées spatiales qui identifient une position pour l'aéronef, par exemple dans le référentiel terrestre, trois valeurs de vitesses chacune selon une des coordonnées spatiales, et trois valeurs angulaires pour identifier une orientation de l'aéronef, par exemple trois valeurs d'angles d'Euler, pour un total de neuf coordonnées d'état. Dans ces conditions, un intervalle d'état pour l'aéronef 20 est formé par une combinaison de neuf intervalles unidimensionnels qui sont relatifs chacun séparément à l'une des coordonnées d'état. Un tel intervalle d'état est appelé boîte dans le jargon de l'Homme du métier.

Le procédé de filtrage particulaire régularisé à boîtes est initialisé par la fourniture de plusieurs intervalles d'état initiaux, chacun associé à un poids qui indique une valeur de probabilité pour que l'état vrai de l'aéronef 20 se trouve initialement dans cet intervalle d'état initial. Ainsi, N intervalles d'état initiaux sont fournis, N étant un nombre entier, par exemple égal à 16 ou 32, de préférence inférieur ou égal à 128. Chaque intervalle d'état initial est associé individuellement à une valeur de poids, qui peut être égale à 1/N.

Le procédé est ensuite constitué par des itérations successives d'une séquence d'étapes, chaque nouvelle exécution de la séquence d'étapes produisant une actualisation des intervalles d'état, avec des valeurs actualisées de poids qui sont associées une-à-un aux intervalles d'état actualisés. En outre, chaque nouvelle exécution de la séquence d'étapes est effectuée à partir des intervalles d'état et leurs valeurs de poids associées tels que fournis par l'exécution juste antérieure de la séquence d'étapes.

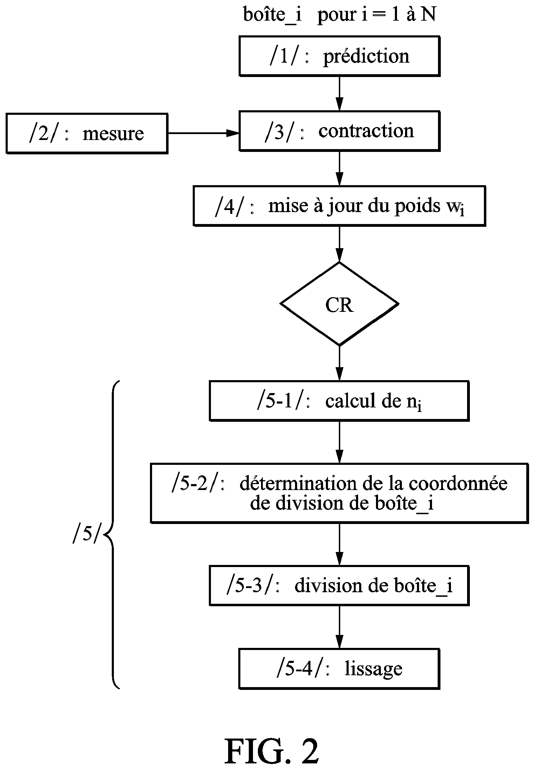

Chaque séquence d'étapes comprend une étape de prédiction, notée /1/ dans [Fig. 2], une étape de mesure notée /2/, une étape de contraction notée /3/, une étape /4/ de mise-à-jour du poids de chaque intervalle d'état, et une étape /5/ de redistribution des intervalles d'état. Les étapes /1/ et /3/ à /5/ sont exécutées pour chaque intervalle d'état. Etant donné que l'étape /5/ produit une redistribution des intervalles d'état tels que résultant de l'étape /3/, elle est de préférence exécutée de façon à conserver un nombre constant d'intervalles d'état. Alors l'unité de calcul 3 peut être conçue et dimensionnée pour traiter N intervalles d'état à chaque exécution de la séquence des étapes /1/ à /5/. i est un indice entier, de 1 à N, qui numérote les intervalles d'état qui sont traités à chaque itération de cette séquence des étapes /1/ à /5/.

Pour chaque intervalle d'état i, noté boîte_i, l'étape de prédiction /1/ consiste à recueillir les résultats de dernières mesures d'accélération et de vitesse angulaire, tels que délivrés par la centrale inertielle 1. Eventuellement, les résultats de plusieurs mesures qui ont été effectuées par la centrale inertielle 1 depuis l'exécution précédente de la séquence des étapes /1/ à /5/ peuvent être recueillis. Pour chacun des intervalles d'état boîte_i, cette étape /1/ comprend aussi de calculer une évolution de cet intervalle d'état pendant la période de temps qui s'est écoulée entre les deux exécutions de l'étape /1/, relatives à l'itération précédente et la nouvelle itération en cours de la séquence des étapes /1/ à /5/. Le principe de calcul d'une telle évolution de chaque intervalle d'état boîte_i, à partir des résultats des mesures d'accélération et de vitesse angulaire, est supposé connu de l'Homme du métier. On pourra se référer à ce sujet à l'article de Merlinge, N., Dahia, K., Piet-Lahanier, H., Brusey, J., & Horri, N. qui est intitulé «A Box Regularized Particle Filter for state estimation with severely ambiguous and non-linear measurements», Automatica (2019), Vol. 104, pp. 102-110. Cette étape /1/ aboutit à une translation, accompagnée le plus souvent d'un changement de longueur, de chaque intervalle unidimensionnel qui est relatif à l'une des coordonnées d'état de l'aéronef 20. Dans la partie générale de la présente description, chaque intervalle d'état boîte_i tel qu'existant au moment de débuter l'exécution de l'étape /1/ a été appelé intervalle d'état antérieur, et cet intervalle d'état boîte_i tel que modifié par l'étape /1/ a été appelé intervalle d'état ultérieur.

L'étape de mesure 121 consiste à recueillir le résultat de la dernière mesure de distance H tel que délivré par la sonde télémétrique 2. Eventuellement, les résultats de plusieurs dernières mesures qui ont été effectuées par la sonde télémétrique 2 depuis l'exécution précédente de l'étape /2/, lors de l'itération précédente de la séquence des étapes /1/ à /5/, peuvent être recueillis.

L'étape de contraction /3/ consiste à réduire la taille de chaque intervalle d'état boîte_i en fonction d'incompatibilités qui existeraient entre des parties de cet intervalle d'état et le ou les dernier(s) résultat(s) de mesure de distance H recueillis à l'étape /2/. Typiquement, les six coordonnées de position et d'attitude de l'aéronef 20, telles que pouvant varier à l'intérieur de chaque intervalle d'état boîte_i résultant de l'étape /1/, sont combinées à des valeurs de hauteur de relief lues dans une carte de terrain qui est mémorisée, afin d'obtenir une estimation de la distance H associée à chaque état. Un tel calcul peut être effectué de la façon connue qui a été rappelée au début de cette description. La distance H ainsi estimée est comparée au résultat de la mesure de l'étape /2/. De façon générale, une équation implicite peut être mise en oeuvre pour convertir chaque état de l'aéronef 20 en une valeur de distance H, en utilisant la carte de terrain mémorisée. Mais une telle équation, appelée équation d'observation par l'Homme du métier, peut être difficile à inverser localement, si bien que modéliser sa fonction inverse par une partie de fonction analytique et une partie de fonction tabulée peut être avantageux. L'Homme du métier pourra encore se reporter à l'article de Merlinge et al., Automatica 104(2019), cité plus haut, au sujet de l'étape /3/ qui n'est pas directement concernée par l'amélioration du procédé que procure l'invention.

L'étape de mise-à-jour /4/ consiste à mettre à jour la valeur du poids de chaque intervalle d'état tel que résultant de l'étape /3/. Par exemple, une nouvelle valeur du poids de l'intervalle d'état boîte_i peut être égale à la valeur du poids de cet intervalle d'état boîte_i telle qu'existant avant d'effectuer cette mise-à-jour, multipliée par la taille de l'intervalle d'état boîte_i tel que résultant de l'étape de contraction /3/, et divisée par la taille de l'intervalle d'état boîte_i tel que résultant de l'étape de prédiction /1/ avant d'appliquer l'étape de contraction /3/. D'autres formules de mise-à-jour des valeurs de poids peuvent être adoptées alternativement. Eventuellement, les valeurs de poids telles que résultant de l'une de ces formules peuvent en plus être corrigées, par exemple en les multipliant par un facteur commun non-nul, pour assurer que leur somme soit égale à l'unité.

L'étape /5/ a pour but de redistribuer les intervalles d'état tels que résultant de l'étape /3/, pour obtenir une meilleure représentativité statistique des états qui sont possibles pour l'aéronef 20. L'exécution de cette étape /5/ peut être soumise au résultat d'un test optionnel désigné par CR dans [Fig. 2]. Ce test consiste à déterminer si un critère de représentativité est satisfait par les intervalles d'état avec leurs valeurs de poids respectives. Il porte sur toutes les valeurs des poids $w_i$ telles qu'actualisées à l'étape /4/, où $w_i$ est le poids qui est associé à l'intervalle d'état boîte_i. Un premier critère de représentativité qui peut être utilisé est celui connu sous l'appellation de critère N-efficace. Ce critère est satisfait si $(\Sigma_{i=1...N} w_i^2)^{-1} < \theta eff \cdot N$, où $\theta_{eff}$ est un paramètre d'ajustement du critère N-efficace, compris entre 0 et 1. Un autre critère de représentativité aussi possible est celui qui est connu sous l'appellation de critère entropique : il est satisfait si $\log(N) + \Sigma_{i=1...N} w_i \cdot \log(w_i) > \theta_{ent} \cdot N$, où $\theta_{ent}$ est un paramètre d'ajustement du critère entropique, compris entre 0 et 1. Mais d'autres critères de représentativité qui sont aussi connus de l'Homme du métier peuvent encore être utilisés alternativement. L'étape /5/ de redistribution des intervalles d'état est alors appliquée si le critère de représentativité n'est pas satisfait.

L'étape /5/ comprend d'abord de déterminer un nombre de division ni qui est attribué à l'intervalle d'état boîte_i, avec l'indice i qui numérote encore les intervalles d'état de 1 à N. Cette sous-étape est notée /5-1/ dans [Fig. 2]. De façon connue, elle peut être exécutée en utilisant une méthode de tirage multinomial. Une telle méthode consiste à tirer des points aléatoirement et répétitivement à l'intérieur d'un segment unidimensionnel, pour déterminer le nombre ni des sous-intervalles qui sont destinés à remplacer l'intervalle d'état boîte_i, en fonction des valeurs des poids $w_i$ de tous les intervalles d'état telles que mises-à-jour à l'étape /4/. Le segment de tirage est constitué par une juxtaposition de segments élémentaires, dont les longueurs individuelles correspondent une-à-une aux valeurs des poids des intervalles d'état. Le nombre ni des sous-intervalles qui remplaceront l'intervalle d'état boîte_i est alors proportionnel au nombre de points tirés aléatoirement qui appartiennent au segment élémentaire dont la longueur est égale à la valeur de poids de l'intervalle d'état boîte_i. Si la valeur de ni qui est ainsi déterminée pour l'un des intervalles d'état est nulle, cet intervalle d'état est supprimé, sinon l'intervalle d'état boîte_i est divisé en ni sous-intervalles, la valeur obtenue pour ni étant statistiquement d'autant plus grande que le poids de l'intervalle d'état boîte_i tel que résultant de l'étape /4/ est élevé. Eventuellement, les valeurs de ni qui sont ainsi obtenues peuvent être multipliées par un facteur constant et arrondies, afin de limiter le nombre total des sous-intervalles mis en oeuvre, et/ou assurer que la somme de toutes les valeurs de ni est égale à N. Toutefois, cette façon d'exécuter la sous-étape /5-1/ n'est donnée qu'à titre d'exemple, et des méthodes différentes peuvent être utilisées alternativement dans des variantes de mise en oeuvre de l'invention.

Chaque intervalle d'état boîte_i est alors destiné à être divisé en ni sous-intervalles, à la sous-étape /5-3/, par exemple de l'une des façons qui sont décrites dans les articles suivants :

«An introduction to box particle filtering [lecture notes]» de Gning, A., Ristic, B., Mihaylova, L., & Abdallah, F., IEEE Signal Processing Magazine (2013), Vol. 30(4), pp. 166-171 ; et

«A Box Regularized Particle Filter for state estimation with severely ambiguous and non-linear measurements» de Merlinge, N., Dahia, K., Piet-Lahanier, H., Brusey, J., & Horri, N., Automatica (2019), Vol. 104, pp. 102-110, déjà cité plus haut.

Ces méthodes de division consistent à déterminer d'abord celle des coordonnées d'état du système, selon laquelle l'intervalle d'état boîte_i est le plus étendu. Cette détermination est l'objet de la sous-étape /5-2/ qui est décrite maintenant.

Chacun des intervalles d'état boîte_i concerne plusieurs coordonnées d'état d'au moins deux types différents. Par exemple, dans le cas de la centrale de navigation 10 qui a été décrite plus haut pour l'aéronef 20, les trois coordonnées de position, notées $x_1$, $x_2$ et $x_3$, sont des coordonnées d'état d'un premier type, les trois vitesses, notées $v_1$, $v_2$ et vs, sont des coordonnées d'état d'un deuxième type, et les trois angles d'attitude, notés $\theta_1$, $\theta_2$ et $\theta_3$, de l'aéronef 20 sont des coordonnées d'état d'un troisième type. Alors, des valeurs normalisées et sans dimension des longueurs des intervalles unidimensionnels de l'intervalle d'état boîte_i, selon chacune des coordonnées d'état, sont :

$$\Delta x_{j\_n} = \Delta x_j \cdot (\Delta x_1^2 + \Delta x_2^2 + \Delta x_3^2)^{-1/2},$$

$$\Delta v_{j\_n} = \Delta v_j \cdot (\Delta v_1^2 + \Delta v_2^2 + \Delta v_3^2)^{-1/2},$$

et

$$\Delta \theta_{j\_n} = \Delta \theta_j \cdot (\Delta \theta_1^2 + \Delta \theta_2^2 + \Delta \theta_3^2)^{-1/2},$$

pour j=1, 2 et 3 dans chaque cas, où $\Delta x_j$, $\Delta v_j$ et $\Delta \theta_j$ sont les longueurs des intervalles unidimensionnels respectifs des neuf coordonnées d'état pour l'intervalle d'état boîte_i. Chacune des valeurs $\Delta x_j^2$, $\Delta v_j^2$ et $\Delta \theta_j^2$ peut être calculée en utilisant le procédé qui a été présenté plus haut pour $X^\alpha$, avec $\alpha$ égal à 2. Puis chacun des facteurs $(\Delta x_1^2 + \Delta x_2^2 + \Delta x_3^2)^{-1/2}$, $(\Delta v_1^2 + \Delta v_2^2 + \Delta v_3^2)^{-1/2}$ et $(\Delta \theta_1^2 + \Delta \theta_2^2 + \Delta \theta_3^2)^{-1/2}$ peut aussi être calculé en utilisant le même procédé, mais avec $\alpha$ qui est alors égal à -1/2. Ces facteurs ont été appelés valeurs de norme de parties d'intervalle d'état dans la partie générale de la présente description. Les valeurs normalisées $\Delta x_{j\_n}$, $\Delta v_{j\_n}$ et $\Delta \theta_{j\_n}$ des longueurs des neufs intervalles unidimensionnels de l'intervalle d'état boîte_i sont alors obtenues selon les formules précédentes, par calcul de produits.

Ces valeurs normalisées $\Delta x_{j\_n}$, $\Delta v_{j\_n}$ et $\Delta \theta_{j\_n}$ peuvent être comparées entre elles, et la coordonnée d'état selon laquelle l'intervalle d'état boîte_i est le plus étendu est celle qui correspond à la plus grande des valeurs normalisées $\Delta x_{j\_n}$, $\Delta v_{j\_n}$ et $\Delta \theta_{j\_n}$, en considérant leurs valeurs absolues. Par exemple, l'intervalle d'état boîte_i est le plus étendu selon la coordonnée de position $x_1$ si $\Delta x_{1\_n}$ est la plus grande des valeurs normalisées $\Delta x_{j\_n}$, $\Delta v_{j\_n}$ et $\Delta \theta_{j\_n}$, ou bien il est le plus étendu selon la coordonnée de vitesse $v_2$ si $\Delta v_{2\_n}$ est la plus grande des neuf valeurs normalisées, etc.

A la sous-étape /5-3/, l'intervalle d'état boîte_i est divisé en ni sous-intervalles contigus, en divisant en ni segments de mêmes longueurs celui des intervalles unidimensionnels de boîte_i qui est le plus étendu, au sens des valeurs normalisées $\Delta x_{j\_n}$, $\Delta v_{j\_n}$ et $\Delta \theta_{j\_n}$. Chaque sous-intervalle possède donc l'un de ces segments pour intervalle unidimensionnel selon la coordonnée d'état qui correspond à l'extension maximale de l'intervalle d'état boîte_i, et les mêmes intervalles unidimensionnels que cet intervalle d'état boîte_i selon les autres coordonnées d'état. Les ni sous-intervalles qui sont ainsi construits constituent donc une partition de l'intervalle d'état boîte_i. Ils forment de nouveaux intervalles d'état à partir desquels le procédé de filtrage particulaire régularisé à boîtes est continué. Une valeur de poids est attribuée à chacun d'eux, qui est égale à celle de l'intervalle d'état boîte_i divisée par le nombre de division $n_i$. Ces nouveaux intervalles d'état sont alors re-numérotés par l'indice i, avantageusement de 1 à N, pour la poursuite du procédé de filtrage.

Enfin, la sous-étape /5-4/, optionnelle, consiste à corriger les nouveaux intervalles d'état tels que résultant de la sous-étape /5-3/, afin qu'ils produisent, avec leurs valeurs de poids associées, une représentation statistique encore meilleure de l'état du système, c'est-à-dire de l'état de l'aéronef 20 pour l'exemple considéré. Une telle modification des intervalles d'état est couramment appelée lissage ou régularisation de la représentation statistique de l'état du système, dans le jargon de l'Homme du métier. Des corrections qui sont appliquées pour cela aux intervalles d'état peuvent consister en des déplacements aléatoires des bornes des intervalles unidimensionnels qui constituent les arêtes de chaque intervalle d'état boîte_i. De préférence, les valeurs de poids respectives qui sont associées aux intervalles d'état ne sont pas modifiées dans cette sous-étape /5-4/. Des méthodes de lissage par noyau, appelées aussi régularisation par noyau, peuvent être appliquées, notamment telles que décrites dans l'article de Merlinge et al., Automatica 104(2019), déjà cité. Selon ces méthodes, le déplacement aléatoire qui est appliqué à chaque borne d'intervalle unidimensionnel est généré selon une répartition statistique déterminée, qui est appelée noyau. En particulier, des méthodes de lissage par noyau uniforme, ou des méthodes de lissage par noyau gaussien, peuvent être appliquées. Toutefois, une méthode de lissage par noyau d'Epanechnikov, telle que décrite maintenant, peut être préférée.

De façon connue, le noyau d'Epanechnikov est défini par la fonction de densité de probabilité $f(x) = 3 \cdot (1 - x^2)/4$, où x est la variable aléatoire comprise entre -1 et 1, les valeurs -1 et 1 étant permises. Son espérance est nulle, et sa variance est égale à 1/5.

La sous-étape /5-4/ comprend donc en premier lieu de générer des corrections aléatoires à appliquer à chaque intervalle unidimensionnel de coordonnée d'état qui détermine chacun des intervalles d'état boîte_i, puis d'appliquer ces corrections.

On note d le nombre de coordonnées d'état du système considéré, et d'=2·d le nombre de bornes qui déterminent chaque intervalle d'état de ce système, c'est-à-dire chaque boîte utilisée dans le procédé de filtrage particulaire régularisé. Dans le cas de l'aéronef 20, d=9 et d'=18.

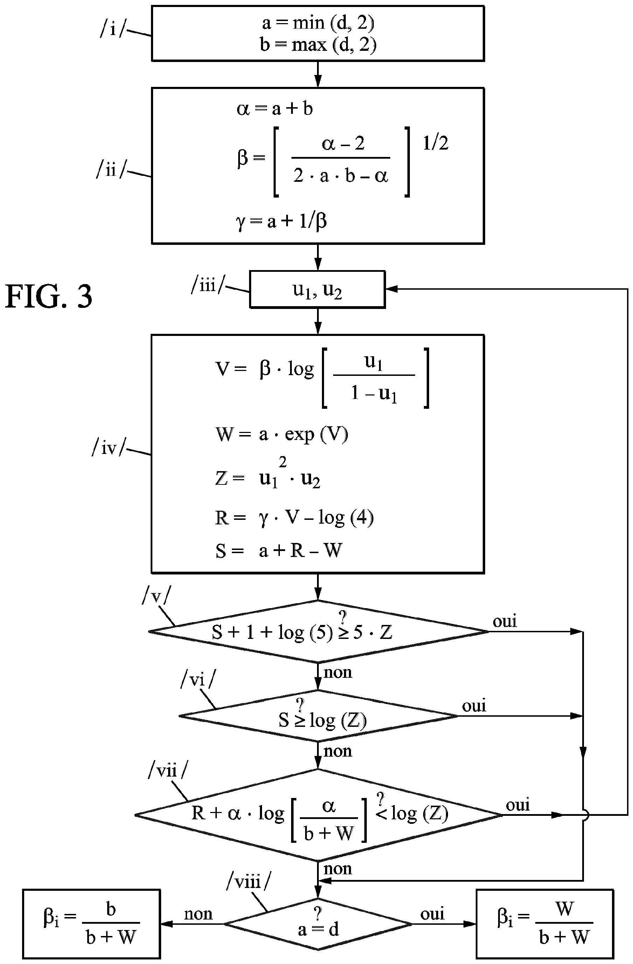

On génère d'abord N premières valeurs aléatoires, notées $\beta_i$ et comprises entre 0 et 1, les valeurs 0 et 1 étant permises, i étant l'indice entier de numérotation des intervalles d'état tel qu'utilisé précédemment, chacune selon une loi bêta de distribution statistique, de premier paramètre égal à d et de second paramètre égal à 2. De façon connue, la loi bêta dont les paramètres sont d et 2 est définie par la fonction de densité de probabilité $x^{d/2-1} \cdot (1-x) \cdot \Gamma 1(d/2 + 2)/[\Gamma(d/2) \cdot \Gamma(2)]$, où x désigne la variable aléatoire, et $\Gamma$ désigne la fonction gamma. Une façon possible de générer les valeurs $\beta_i$ conformément à la loi bêta utilise l'algorithme de Cheng qui sera rappelé plus loin, en référence à [Fig. 3].

On génère ensuite N·d' secondes valeurs aléatoires, notées $v_{k,i}$, i étant encore le même indice que précédemment et k étant un autre indice entier qui varie de 1 à d', chacune selon une loi normale de distribution statistique à valeur moyenne nulle et écart-type égal à l'unité, couramment appelée loi normale réduite. L'indice k dénombre les degrés de liberté dans la définition de chaque intervalle d'état. Il identifie deux bornes d'intervalle unidimensionnel pour chaque coordonnée d'état ou, de façon équivalente, une valeur centrale et une longueur d'intervalle pour chaque intervalle unidimensionnel de coordonnée d'état. De façon connue, la loi normale à valeur moyenne nulle et écart-type égal à l'unité est définie par la fonction de densité de probabilité $(1/\pi^{1/2}) \cdot \exp[-x^2/2]$, où x désigne encore la variable aléatoire, mais dans ce cas positive, nulle ou négative. Elle peut être simulée par une somme de valeurs aléatoires initiales qui sont générées chacune selon une loi uniforme de distribution statistique, et une telle loi uniforme de distribution statistique peut être produite par une méthode de type LFSR, pour «linear feedback shift register» en anglais, ou registre à décalage avec rétroaction linéaire en français, par exemple.

N premiers nombres, notés $\xi_i$, sont alors calculés à partir des valeurs aléatoires $v_{k,i}$ de la façon suivante : $\xi_i = [\Sigma_{k=1 \text{ à } d'} (v_{k,i})^2]^{1/2}$. Avantageusement, chacun de ces nombres $\xi_i$ peut être calculé en appliquant le procédé de calcul d'une estimation de $X^\alpha$ qui a été décrit plus haut, à $X = v_{k,i}$ avec $\alpha=2$, puis à $X = \Sigma_{k=1 \text{ à } d'} (v_{k,i})^2$ avec $\alpha=1/2$.

N deuxièmes nombres, notés $\alpha_i$, sont ensuite calculés selon la formule : $\alpha_i = \beta_i^{1/2}/\xi_i$. Avantageusement, chacun de ces nombres $\alpha_i$ peut être calculé en appliquant de nouveau le procédé de calcul d'une estimation de $X^\alpha$ qui a été décrit plus haut, à $X = \beta_i$ avec $\alpha=1/2$.

Dans ces conditions, N·d' troisièmes nombres qui sont calculés de la façon suivante : $\varepsilon_{k,i} = v_{k,i} \cdot \alpha_i$, satisfont chacun la loi de distribution statistique d'Epanechnikov d'espérance nulle et de variance égale à 1/5.

Par ailleurs, une amplitude de bruit, notée h, est calculée de la façon suivante :

$$h = \mu \cdot A \cdot N^{-1/(d'+4)},$$

où $A = [8 \cdot c_{d'}^{-1} \cdot (d'+4) \cdot (2 \cdot \pi^{1/2})^{d'}]^{1/(d'+4)}$. Dans cette expression de A, $c_{d'}$ désigne le volume de l'hyper-sphère de dimension d' et de rayon unitaire, et $\mu$ est un paramètre d'ajustement qui est compris entre 0 et 1. De façon connue, $c_{d'} = \pi^{d'/2}/\Gamma(d'/2 + 1)$, où $\Gamma$ désigne encore la fonction gamma. La valeur de $c_{d'}$ peut soit être pré-calculée et stockée de façon à être disponible pour l'unité de calcul 3, soit être calculée par cette dernière, par exemple en utilisant une table préenregistrée de valeurs de la fonction gamma. Le paramètre d'ajustement $\mu$ permet de contrôler un compromis entre l'efficacité du lissage aléatoire et celle du filtre particulaire. En effet, l'efficacité du filtre particulaire résulte d'une continuité des trajectoires possibles pour le système, décrites par ceux des intervalles d'état qui sont maintenus lors de plusieurs exécutions successives de la séquence des étapes /1/ à /5/. A contrario, le lissage aléatoire produit un brouillage de ces trajectoires. La valeur du paramètre $\mu$ peut être fixée initialement pour le procédé à exécuter par l'unité de calcul 3. Elle dépend notamment des nombres N et d, ainsi que du type de noyau utilisé pour la sous-étape /5-4/. Par exemple, le paramètre d'ajustement $\mu$ peut être pris égal à 0,1. L'utilisation du paramètre d'ajustement $\mu$ est notamment décrite dans la thèse de Merlinge, N., intitulée «State estimation and trajectory planning using box particule kernels», Université Paris-Saclay, 2018.

Les modifications aléatoires à appliquer à l'intervalle d'état boîte_i sont alors $h \cdot \varepsilon_{k,i}$, où k repère les bornes de coordonnées d'état, ou bien les valeurs centrales ou longueurs d'intervalles de coordonnées d'état. Ces modifications peuvent être disposées sous forme d'un vecteur $E_i$, tel que $E_i = [h \cdot \varepsilon_{k,i}]_{k=i,...,d'}$.

On décrit maintenant une méthode possible pour appliquer les modifications aléatoires aux intervalles d'état tels que résultant de la sous-étape /5-3/.

Pour cela, on peut représenter chaque intervalle d'état boîte_i par un vecteur $\Xi_i$ de hauteur d', dont les coordonnées regroupent les bornes de tous les intervalles unidimensionnels de coordonnées d'état pour cet intervalle d'état, ou bien les valeurs centrales et les longueurs de ses intervalles unidimensionnels. Alors, les valeurs modifiées aléatoirement du vecteur $\Xi_i$ peuvent être obtenues en remplaçant ce vecteur $\Xi_i$ par $\Xi_i + D \times E_i$, où D est une matrice carrée de dimension d' telle que le produit de D par la transposée de D soit égal à $\sum_{i=1 \text{ à } N} \Xi_i \cdot w_i \cdot {}^t\Xi_i$ : $D \times {}^tD = \sum_{i=1 \text{ à } N} \Xi_i \cdot w_i \cdot {}^t\Xi_i$, où $w_i$ est la valeur de poids de l'intervalle d'état boîte_i. Par exemple, la matrice D peut être déterminée par la méthode de Cholesky, qui est bien connue de l'Homme du métier de sorte qu'il n'est pas nécessaire de la décrire à nouveau ici. Dans ces conditions, le vecteur $\Xi_i$ est à remplacer par le vecteur $\Xi_i + D \times E_i$, pour appliquer les variations aléatoires selon le noyau sélectionné, d'Epanechnikov dans le cas présent, aux intervalles unidimensionnels de coordonnées d'état de l'intervalle d'état boîte_i. L'ensemble des vecteurs $\Xi_i + D \times E_i$ déterminent tous les nouveaux intervalles d'état qui résultent de la modification par lissage.

La méthode qui vient d'être décrite pour appliquer, à la sous-étape /5-4/, un lissage par noyau d'Epanechnikov aux sous-intervalles tels qu'ils résultent de la sous-étape /5-3/, est mise en oeuvre par l'unité de calcul 3 de la centrale de navigation à corrélation de mesure 10.

Les intervalles d'état mis-à-jour, tels que résultant de la sous-étape /5-3/ ou éventuellement de la sous-étape /5-4/, avec leurs valeurs de poids associées, constituent le résultat du procédé de filtrage particulaire régularisé à boîtes pour une exécution de la séquence des étapes /1/ à /5/. Plusieurs itérations sont enchaînées de façon récurrente, chaque nouvelle itération à partir des résultats de l'itération précédente. L'itération qui est effectuée en dernier fournit une distribution de probabilité actualisée qui caractérise l'état vrai de l'aéronef 20. En outre, les intervalles d'état mis-à-jour qui en résultent, associés à leurs valeurs de poids respectives, sont à utiliser en tant qu'intervalles d'état antérieurs pour une nouvelle exécution de la séquence des étapes /1/ à /5/.

On décrit maintenant, en référence à [Fig. 3], une méthode de génération de chaque valeur aléatoire $\beta_i$, de façon à respecter la loi de distribution statistique Bêta(d, 2). Cette méthode correspond à l'algorithme de Cheng, publié dans l'article intitulé «Generating beta variates with non-integral shape parameters», Communications of the ACM, 21 (4), pp. 317-322, 1978.

Pour cela, on détermine d'abord les nombres a et b suivants à l'étape /i/ :

a qui est égal à la valeur minimale entre d et 2 : $a = \min(d, 2)$, et
b qui est égal à la valeur maximale entre d et 2 : $b = \max(d, 2)$.

Pour la plupart des applications de l'invention, d est supérieur à 2, de sorte que a=2 et b=d. On calcule ensuite, à l'étape /ii/, les trois nombres $\alpha$, $\beta$ et $\gamma$ tels que :

$$\alpha = a + b, \text{ qui est égal à } d+2,$$

$$\beta = [(\alpha - 2)/(2 \cdot a \cdot b - \alpha)]^{1/2}, \text{ qui est égal à } [d/(3 \cdot d - 2)]^{1/2} ;$$

et

$$\gamma = a + 1/\beta.$$

Les nombres $\alpha$, $\beta$ et $\gamma$ peuvent avoir été pré-calculés et stockés pour être directement accessibles par l'unité de calcul 3. A l'étape /iii/, deux nombres $u_1$ et $u_2$ sont générés aléatoirement chacun selon la loi uniforme de distribution statistique, entre 0 et 1, par exemple en utilisant une méthode de type LFSR. Puis les nombres V, W, Z, R et S sont calculés à l'étape /iv/, selon les formules suivantes :

$V = \beta \cdot \log[u_1/(1-u_1)]$, où log désigne la fonction logarithmique de base e,
$W = a \cdot \exp(V)$, où exp désigne la fonction exponentielle de base e,

$$Z = u_1^2 \cdot u_2,$$

$$R = \gamma \cdot V - \log(4),$$

et

$$S = a + R - W.$$

La valeur du nombre $Z$ peut avantageusement être calculée chaque fois en appliquant le procédé de calcul d'une estimation de $X^\alpha$ qui a été décrit plus haut, à $X = u_1$ avec $\alpha = 2$. En outre, les valeurs des fonctions logarithme et exponentielle peuvent être obtenues à partir de tables de valeurs préenregistrées pour ces fonctions.

Les étapes /v/ à /viii/ sont alors effectuées successivement, en formant une séquence de tests qui sont appliqués en série :

étape /v/ : si $S + 1 + \log(5)$ est supérieur ou égal à $5 \cdot Z$, aller directement à l'étape /viii/ ;
étape /vi/ : si $S$ est supérieur ou égal à $\log(Z)$, aller directement à l'étape /viii/ ;
étape /vii/ : si $R + \alpha \cdot \log[\alpha/(b+W)]$ est inférieur à $\log(Z)$, retourner à l'étape /iii/ ;
étape /viii/ : si $a$ est égal à $d$, alors la valeur $\beta_i$ qui est générée aléatoirement selon la loi bêta de paramètres $d$ et 2, est égale à $W/(b+W)$, et si $a$ est différent de $d$, elle est égale à $b/(b+W)$. Pour la plupart des applications de l'invention, où $d$ est supérieur à 2, la valeur aléatoire $\beta_i$ est égale à $d/(d+W)$.

Un des avantages de cet algorithme est que le nombre d'exécutions de la séquence des étapes /iii/ à /viii/ qui est nécessaire pour obtenir les N valeurs aléatoires $\beta_i$ est prédictible.

Il est entendu que l'invention peut être reproduite en modifiant des aspects secondaires des modes de mise en oeuvre qui ont été décrits en détail ci-dessus, tout en conservant certains au moins des avantages cités. Parmi de telles modifications possibles, les suivantes sont citées de façon non-limitative :

- des algorithmes alternatifs peuvent être utilisés pour certaines étapes ou sous-étapes ;
- la centrale inertielle peut être utilisée comme source de mesure de l'état complet du véhicule. L'état du système tel que considéré pour l'invention comprend alors trois valeurs d'accélération et trois valeurs de vitesse angulaire, selon les trois coordonnées spatiales, en plus des trois valeurs de coordonnées spatiales qui identifient une position pour le véhicule, des trois valeurs de vitesses et des trois valeurs angulaires d'attitude. Dans ce cas, chaque état du système comprend des valeurs pour quinze coordonnées d'état ;
- à l'étape /1/, un modèle dynamique d'évolution d'état peut être utilisé pour le système, ce modèle pouvant tenir compte, lorsqu'il s'agit d'un véhicule, de commandes qui sont appliquées à un ou plusieurs moteur(s) et à un système de contrôle d'attitude du véhicule ; et
- l'unité de calcul peut être un processeur à structure ARM, un processeur à plusieurs coeurs de calcul, un ou plusieurs processeur(s) graphique(s), etc, à la place d'une puce de type FPGA, DSP, CPU ou RISC.

Enfin, l'invention peut être appliquée à d'autres domaines que l'aéronautique. Par exemple, un procédé de filtrage particulaire régularisé à boîtes qui est conforme à l'invention peut aussi être mis en oeuvre pour un véhicule au sol, un navire maritime de surface, un sous-marin, un satellite ou une sonde spatiale, en utilisant à chaque fois un référentiel et des mesures d'état vrai qui sont appropriés.

**Revendications**

1.  Procédé de filtrage particulaire régularisé à boîtes, pour prédire un état d'un système, ledit système étant un véhicule (20) terrestre, aérien, maritime ou spatial qui est muni d'une centrale de navigation à corrélation de mesure (10), le procédé comprenant au moins une exécution d'une séquence qui inclut les étapes suivantes :

    /1/ une étape de prédiction, comprenant de prédire des intervalles d'état ultérieurs, chaque intervalle d'état ultérieur étant obtenu en appliquant au moins une règle de propagation à un d'une pluralité d'intervalles d'état antérieurs ;
    121 une étape de mesure d'un état vrai du système ;
    /3/ une étape de contraction de l'un au moins des intervalles d'état ultérieurs, en fonction d'au moins un résultat de mesure de l'état vrai qui a été obtenu à l'étape 121 ;

/4/ une étape de mise-à-jour de poids, comprenant d'affecter un poids à chaque intervalle d'état ultérieur en fonction d'une taille dudit intervalle d'état ultérieur tel que résultant de l'étape /3/, d'une taille dudit intervalle d'état ultérieur tel que résultant de l'étape /1/ avant l'étape /3/, et d'un poids de l'intervalle d'état antérieur dont a résulté ledit intervalle d'état ultérieur lors de l'étape /1/ ; et

/5/ une étape de redistribution des intervalles d'état ultérieurs, comprenant de remplacer au moins un des intervalles d'état ultérieurs i par ni sous-intervalles provenant d'une division de l'intervalle d'état ultérieur i, i étant un indice entier de numérotation des intervalles d'état ultérieurs et ni étant un nombre des sous-intervalles qui remplacent ledit intervalle d'état ultérieur i, chaque sous-intervalle étant destiné à constituer un intervalle d'état antérieur pour une itération ultérieure de la séquence des étapes /1/ à /5/,

le procédé étant **caractérisé en ce que** l'une au moins des étapes /1/, /3/ à /5/ comprend au moins un calcul d'une estimation de la valeur de $X^{\alpha}$, où X est un nombre variable pour chaque exécution de ladite étape et $\alpha$ est une valeur d'exposant non-nulle qui est constante entre des exécutions différentes de ladite d'étape, le nombre X étant positif si l'exposant $\alpha$ n'est pas un nombre entier et non-nul si l'exposant $\alpha$ est négatif, le calcul comprenant les étapes suivantes :

/a/ d'écrire le nombre X sous une forme $X = \pm(1+m) \cdot 2^{ex}$, où ex est un nombre entier négatif, positif ou nul, et m est une mantisse comprise entre 0 et 1, la valeur 0 et étant permise, de sorte qu'une représentation binaire du nombre X soit :

I(X) = L (m + ex + B), où $L=2^{n}$ avec n qui est un nombre de bits d'une écriture binaire de la mantisse m, et B est un nombre constant positif ou nul, appelé biais ;

/b/ de calculer une représentation binaire de $X^{\alpha}$ sous la forme :

$I(X^{\alpha}) = \alpha \cdot I(X) + L \cdot (1 - \alpha) (B - \sigma)$, où $\sigma$ est un nombre constant dont la valeur est enregistrée ; et

/c/ d'obtenir l'estimation de la valeur de $X^{\alpha}$ à partir de la représentation binaire $I(X^{\alpha})$.

2. Procédé selon la revendication 1, suivant lequel l'étape du procédé de filtrage particulaire régularisé à boîtes qui comprend le calcul de l'estimation de la valeur de $X^{\alpha}$ est l'étape /5/, notamment une sous-étape de l'étape /5/ qui consiste à calculer une valeur de norme d'une partie d'un intervalle d'état ultérieur du système, correspondant à un intervalle de position du système, un intervalle de vitesse dudit système ou un intervalle d'attitude dudit système, et/ou une autre sous-étape de l'étape /5/ qui consiste à appliquer un lissage par noyau de probabilité aux sous-intervalles pour obtenir les intervalles d'état antérieurs de l'itération ultérieure de la séquence des étapes /1/ à /5/.

3. Procédé selon la revendication 1 ou 2, suivant lequel le calcul de l'estimation de la valeur de $X^{\alpha}$ comprend en outre d'exécuter au moins une fois l'étape supplémentaire suivante :

/d/ calculer une nouvelle estimation de la valeur de $X^{\alpha}$ à partir d'une estimation antérieure de la valeur de $X^{\alpha}$, en appliquant un algorithme récursif de résolution approchée d'équation à l'équation $Y^{1/\alpha} - X = 0$ d'inconnue Y, l'estimation de la valeur de X° qui a été obtenue à l'étape /c/ étant utilisée comme estimation antérieure pour une première application dudit algorithme, et la nouvelle estimation de la valeur de $X^{\alpha}$ qui est produite par une $q^{ième}$ application de l'algorithme formant l'estimation antérieure de la valeur de X° pour la $(q+1)^{ième}$ application dudit algorithme, si une telle $(q+1)^{ième}$ application de l'algorithme est effectuée, q étant un nombre entier supérieur ou égal à 1.

4. Procédé selon la revendication 3, suivant lequel l'algorithme récursif de résolution approchée d'équation qui est utilisé à l'étape /d/ est la méthode de Newton.

5. Procédé selon l'une quelconque des revendications précédentes, suivant lequel le nombre n des bits de l'écriture binaire de la mantisse m est égal à 23 et le biais B est égal à 127, ou le nombre n est égal à 52 bits et le biais B est égal 1023.

6. Procédé selon l'une quelconque des revendications précédentes, suivant lequel le nombre constant $\sigma$ est compris entre 0 et 1, de préférence compris entre 0 et 0,5.

7. Procédé selon l'une quelconque des revendications précédentes, suivant lequel la valeur d'exposant $\alpha$ est égale à +2, -2, +1/2 ou -1/2.

8. Unité de calcul (3), comprenant au moins une première entrée adaptée pour recevoir des résultats de mesures répétées d'accélération et de vitesse angulaire d'un système, et une seconde entrée adaptée pour recevoir des résultats de mesures répétées d'un état vrai du système, supplémentaires par rapport aux mesures d'accélération et de vitesse angulaire, et l'unité de calcul étant agencée pour exécuter un procédé de filtrage particulaire régularisé à boîtes qui est conforme à l'une quelconque des revendications précédentes, de façon à produire en sortie une série d'intervalles d'état avec des poids respectifs, le poids qui est associé à chacun des intervalles d'état correspondant à une valeur de probabilité pour que l'état vrai du système soit dans ledit intervalle d'état.

9. Unité de calcul (3) selon la revendication 8, de type circuit à réseau de portes programmables, circuit à réseau de portes fixes, ou processeur d'unité centrale.

10. Centrale de navigation à corrélation de mesure (10), adaptée pour être embarquée à bord d'un véhicule (20), comprenant :

- une centrale inertielle (1), adaptée pour mesurer itérativement des accélérations et des vitesses angulaires du véhicule (20), et pour déduire en utilisant des résultats de mesures des accélérations et des vitesses angulaires, des intervalles d'état ultérieurs respectivement à partir de plusieurs intervalles d'état antérieurs, chaque état du véhicule comprenant des coordonnées de position, de vitesse et d'attitude dudit véhicule ;
- un système de mesure (2), adapté pour mesurer itérativement au moins une caractéristique d'un état vrai du véhicule (20) ; et
- une unité de calcul (3) conforme à la revendication 8 ou 9, et adaptée pour réduire au moins une dérive de la centrale inertielle (1), parmi une dérive de position, une dérive de vitesse et une dérive d'attitude, en utilisant des résultats de mesure de la caractéristique de l'état vrai du véhicule (20) qui sont délivrés par le système de mesure (2).

11. Véhicule (20), comprenant une centrale de navigation à corrélation de mesure (10) qui est conforme à la revendication 10.

**Patentansprüche**

1. Verfahren zur Partikelfilterung mit Rahmenregulierung zur Vorhersage eines Zustandes eines Systems, wobei das System ein Land-, Luft-, See- oder Raumfahrzeug (20) ist, das mit einer Navigationszentrale mit Messkorrelation (10) ausgestattet ist, wobei das Verfahren mindestens eine Ausführung einer Sequenz umfasst, die die folgenden Schritte enthält:

/1/ einen Vorhersageschritt, der die Vorhersage anschließender Zustandsintervalle umfasst, wobei jedes anschließende Zustandsintervall erhalten wird, indem mindestens eine Ausbreitungsregel auf eines einer Vielzahl von vorangehenden Zustandsintervallen angewendet wird;
121 einen Schritt zum Messen eines wahren Zustands des Systems;
/3/ einen Schritt der Kontraktion mindestens eines der anschließenden Zustandsintervalle, basierend auf mindestens einem Messergebnis des wahren Zustands, das in Schritt 121 erhalten wurde;
/4/ einen Schritt der Gewichtungsaktualisierung, der umfasst, jedem anschließenden Zustandsintervall eine Gewichtung basierend auf einer Größe des anschließenden Zustandsintervalls, wie es sich aus Schritt /3/ ergibt, einer Größe des anschließenden Zustandsintervalls, wie es sich aus Schritt /1/ vor Schritt /3/ ergibt, und einer Gewichtung des vorangehenden Zustandsintervalls, aus dem das anschließende Zustandsintervall in Schritt /1/ resultiert, zuzuweisen; und
/5/ einen Schritt zur Umverteilung der anschließenden Zustandsintervalle, das Ersetzen mindestens eines der anschließenden Zustandsintervalle i durch Teilintervalle $n_i$ umfassend, die aus einer Division des anschließenden Zustandsintervalls i stammen, wobei i ein ganzzahliger Index für die Nummerierung der anschließenden Zustandsintervalle ist und $n_i$ eine Anzahl der Teilintervalle ist, die das anschließende Zustandsintervall i ersetzen, wobei jedes Teilintervall dazu bestimmt ist, ein vorangehendes Zustandsintervall für eine anschließende Iteration der Sequenz der Schritte /1/ bis /5/ zu bilden,

wobei das Verfahren **dadurch gekennzeichnet ist, dass** mindestens einer der Schritte /1/, /3/ bis /5/ mindestens eine Berechnung einer Schätzung des Wertes $X^\alpha$ umfasst, wobei X eine variable Zahl für jede Ausführung des Schritts ist und $\alpha$ ein Exponentenwert ungleich null ist, der zwischen verschiedenen Ausführungen des Schritts konstant ist, wobei die Zahl X positiv ist, wenn der Exponent $\alpha$ keine ganze Zahl ist, und ungleich null, wenn der Exponent $\alpha$ negativ ist, wobei die Berechnung die folgenden Schritte umfasst:

/a/ Schreiben der Zahl X in eine Form $X = \pm(1+m)\cdot 2^{ex}$, wobei ex eine negative oder positive ganze Zahl oder null ist und m eine Mantisse zwischen 0 und 1 ist, wobei der Wert 0 zulässig ist, so dass eine binäre Darstellung der Zahl X ist:

$I(X) = L \cdot (m + ex + B)$, wobei $L=2^n$, mit n, das eine Anzahl von Bits einer binären Schreibung der Mantisse m ist, und B, das eine konstante positive Zahl oder Null ist, die Bias genannt wird;

/b/ Berechnen einer binären Darstellung von $X^\alpha$ in der Form von:

$I(X^\alpha) = a \cdot I(X) + L \cdot (1 - \alpha) \cdot (B - \sigma)$, wobei $\sigma$ eine konstante Zahl ist, deren Wert aufgezeichnet ist; und

/c/ erhalten der Schätzung des Wertes $X^\alpha$ ausgehend von der binären Darstellung $I(X^\alpha)$.

2.  Verfahren nach Anspruch 1, wobei der Schritt des Verfahrens zur Partikelfilterung mit Rahmenregulierung, der die Berechnung der Schätzung des Wertes $X^\alpha$ umfasst, der Schritt 151 ist, insbesondere ein Teilschritt des Schritts 151, der darin besteht, einen Standardwert eines Teils eines anschließenden Zustandsintervalls des Systems zu berechnen, der einem Intervall der Position des Systems, einem Intervall der Geschwindigkeit des Systems oder einem Intervall der Lage des Systems entspricht, und/oder ein anderer Teilschritt von Schritt 151, der darin besteht, eine Kernglättung der Wahrscheinlichkeit auf die Teilintervalle anzuwenden, um die vorangehenden Zustandsintervalle der anschließenden Iteration der Sequenz der Schritte /1/ bis 151 zu erhalten.

3.  Verfahren nach Anspruch 1 oder 2, wobei die Berechnung der Schätzung des Wertes $X^\alpha$ ferner umfasst, den folgenden zusätzlichen Schritt mindestens einmal auszuführen:

/d/ Berechnen einer neuen Schätzung des Wertes $X^\alpha$ ausgehend von einer vorangehenden Schätzung des Wertes $X^\alpha$, indem ein rekursiver Algorithmus zur Lösung einer angenäherten Gleichung auf die Gleichung $Y^{1/\alpha} - X = 0$ der Unbekannten Y angewendet wird, wobei die Schätzung des Wertes $X^\alpha$, der in Schritt /c/ erhalten wurde, als vorangehende Schätzung für eine erste Anwendung des Algorithmus verwendet wird, und die neue Schätzung des Wertes $X^\circ$, der durch eine $q^{-te}$ Anwendung des Algorithmus erzeugt wird, die vorangehende Schätzung des Wertes $X^\circ$ für die $(q+1)^{-te}$ Anwendung des Algorithmus bildet, wenn eine solche $(q+1)^{-te}$ Anwendung des Algorithmus durchgeführt wird, wobei q eine ganze Zahl größer oder gleich 1 ist.

4.  Verfahren nach Anspruch 3, wobei der rekursive Algorithmus der Lösung einer angenäherten Gleichung, der im Schritt /d/ verwendet wird, das Newton-Verfahren ist.

5.  Verfahren nach einem der vorhergehenden Ansprüche, wobei die Anzahl n der Bits der binären Schreibung der Mantisse m gleich 23 ist und das Bias B gleich 127, oder die Anzahl n gleich 52 Bits ist und das Bias B gleich 1023.

6.  Verfahren nach einem der vorhergehenden Ansprüche, wobei die konstante Zahl $\sigma$ zwischen 0 und 1 liegt, vorzugsweise zwischen 0 und 0,5.

7.  Verfahren nach einem der vorhergehenden Ansprüche, wobei der Wert des Exponenten $\alpha$ gleich +2, -2, +1/2 oder -1/2 ist.

8.  Recheneinheit (3), die mindestens einen ersten Eingang umfasst, der zum Empfangen von Ergebnissen wiederholter Beschleunigungs- und Winkelgeschwindigkeitsmessungen eines Systems geeignet ist, und einen zweiten Eingang, der zum Empfangen von Ergebnissen wiederholter Messungen eines wahren Zustands des Systems geeignet ist, zusätzlich zu den Beschleunigungs- und Winkelgeschwindigkeitsmessungen, und wobei die Recheneinheit angeordnet ist, um ein Verfahren zur Partikelfilterung mit Rahmenregulierung nach einem der vorhergehenden Ansprüche auszuführen, um als Ausgabe eine Reihe von Zustandsintervallen mit jeweiligen Gewichtungen zu erzeugen, wobei die Gewichtung, die jedem der Zustandsintervalle zugeordnet ist, einem Wahrscheinlichkeitswert entspricht, nach dem der wahre Zustand des Systems innerhalb des Zustandsintervalls liegt.

9.  Recheneinheit (3) nach Anspruch 8, vom Typ Netzschaltung mit programmierbaren Logikgattern, Netzschaltung mit fixierten Logikgattern oder Zentraleinheit-Prozessor.

10. Navigationszentrale mit Messkorrelation (10), die geeignet ist zum Einbau in ein Fahrzeug (20), umfassend:

- eine Inertialzentrale (1), die zur iterativen Messung von Beschleunigungen und Winkelgeschwindigkeiten des Fahrzeugs (20) geeignet ist, und zur Ableitung, unter Verwendung von Messergebnissen von Beschleunigungen und Winkelgeschwindigkeiten, von jeweiligen anschließenden Zustandsintervallen, ausgehend von mehreren vorangehenden Zustandsintervallen, wobei jeder Zustand des Fahrzeugs Positions-, Geschwindigkeits- und Lagekoordinaten des Fahrzeugs umfasst;

- ein Messsystem (2), das zum iterativen Messen mindestens eines Merkmals eines wahren Zustands des Fahrzeugs (20) geeignet ist; und
- eine Recheneinheit (3), nach Anspruch 8 oder 9, die geeignet ist, um mindestens eine Drift der Inertialzentrale (1), unter einer Drift der Position, einer Drift der Geschwindigkeit und einer Drift der Lage zu reduzieren unter Verwendung von Messergebnissen der Merkmale des wahren Zustands des Fahrzeugs (20), die vom Messsystem (2) geliefert werden.

11. Fahrzeug (20), eine Navigationszentrale mit Messkorrelation (10) nach Anspruch 10 umfassend.

**Claims**

1. A method for box regularised particle filtering, to predict a state of a system, said system being a land, air, marine or space vehicle (20) which is provided with a navigation system using measurement correlation (10), the method comprising at least one execution of a sequence which includes the following steps:

   /1/ a prediction step, comprising predicting subsequent state intervals, each subsequent state interval being obtained by applying at least one propagation rule to one of a plurality of previous state intervals;
   /2/ a step of measuring a true state of the system;
   /3/ a step of contracting at least one of the subsequent state intervals, depending on at least one measurement result of the true state which was obtained in step /2/;
   /4/ a weight updating step, comprising assigning a weight to each subsequent state interval depending on a size of said subsequent state interval as resulting from step /3/, a size of said subsequent state interval as resulting from step /1/ before step /3/, and a weight of the previous state interval from which said subsequent state interval resulted during step /1/; and
   /5/ a step of redistributing the subsequent state intervals, comprising replacing at least one of the subsequent state intervals i by $n_i$ sub-intervals originating from a division of the subsequent state interval i, i being an integer index for numbering the subsequent state intervals and $n_i$ being a number of the sub-intervals which replace said subsequent state interval i, each sub-interval being intended to constitute a previous state interval for a subsequent iteration of the sequence of steps /1/ to /5/,

   the method being **characterised in that** at least one of steps /1/, /3/ to /5/ comprises at least one calculation of an estimate of the value of $X^\alpha$, where X is a variable number for each execution of said step and $\alpha$ is a non-zero exponent value which is constant between different executions of said step, the number X being positive if the exponent $\alpha$ is not an integer and non-zero if the exponent $\alpha$ is negative, the calculation comprising the following steps:

   /a/ writing the number X in a form $X = \pm (1+m).2^{ex}$, where ex is a negative, positive or zero integer, and m is a mantissa comprised between 0 and 1, the value 0 and being permissible, such that a binary representation of the number X is:
   $I(X) = L.(m + ex + B)$, where $L=2^n$ with n which is a number of bits of a binary writing of the mantissa m, and B is a constant positive or zero number, called bias;
   /b/ calculating a binary representation of $X^\alpha$ in the form:
   $I(X^\alpha) = a.I(X) + L.(1 - \alpha).(B - \sigma)$, where $\sigma$ is a constant number whose value is recorded; and
   /c/ obtaining the estimate of the value of $X^\alpha$ from the binary representation $I(X^\alpha)$.

2. The method according to claim 1, wherein the step of the box regularised particle filtering method which comprises calculating the estimate of the value of $X^\alpha$ is step 151, in particular a substep of step 151 which consists in calculating a norm value of a portion of a subsequent state interval of the system, corresponding to a position interval of the system, a velocity interval of said system or an attitude interval of said system, and/or another substep of step /5/which consists in applying a probability kernel smoothing to the subintervals to obtain the prior state intervals of the subsequent iteration of the sequence of steps /1/ to /5/.

3. The method according to claim 1 or 2, wherein the calculation of the estimate of the value of $X^\alpha$ further comprises executing at least once the following additional step:
   /d/ calculating a new estimate of the value of $X^\alpha$ from a previous estimate of the value of $X^\alpha$, by applying a recursive algorithm for approximate equation solving to the equation $Y^{1/\alpha} - X = 0$ of unknown Y, the estimate of the value of $X^\alpha$ which was obtained in step /c/ being used as a previous estimate for a first application of said algorithm, and the new estimate of the value of $X^\alpha$ which is produced by a $q^{th}$ application of the algorithm forming the previous estimate of the value of $X^\alpha$ for the $(q+1)^{th}$ application of said algorithm, if such a $(q+1)^{th}$ application of the algorithm is performed, q being an integer which is greater than or equal to 1.

4. The method according to claim 3, wherein the recursive algorithm for approximate equation solving which is used in step /d/ is Newton's method.

5. The method according to any one of the preceding claims, wherein the number n of the bits in the binary writing of the mantissa m is equal to 23 and the bias B is equal to 127, or the number n is equal to 52 bits and the bias B is equal to 1023.

6. The method according to any one of the preceding claims, wherein the constant number $\sigma$ is comprised between 0 and 1, preferably comprised between 0 and 0.5.

7. The method according to any one of the preceding claims, wherein the exponent value $\alpha$ is equal to +2, -2, +1/2 or -1/2.

8. A computing unit (3), comprising at least one first input adapted to receive results of repeated measurements of acceleration and angular velocity of a system, and a second input adapted to receive results of repeated measurements of a true state of the system, additional relative to the acceleration and angular velocity measurements, and the computing unit being arranged to execute a box regularised particle filtering method which is in accordance with any one of the preceding claims, so as to produce as output a series of state intervals with respective weights, the weight which is associated with each of the state intervals corresponding to a probability value for the true state of the system to be in said state interval.

9. A computing unit (3) according to claim 8, of the type of a field-programmable gate array circuit, a fixed gate array circuit, or a central processing unit processor.

10. A navigation system using measurement correlation (10), adapted to be on board a vehicle (20), comprising:

   - an inertial unit (1) adapted to iteratively measure accelerations and angular velocities of the vehicle (20), and to deduce, using results of measurements of the accelerations and angular velocities, subsequent state intervals respectively from several previous state intervals, each state of the vehicle comprising position, velocity and attitude coordinates of said vehicle;
   - a measurement system (2), adapted to iteratively measure at least one characteristic of a true state of the vehicle (20); and
   - a calculation unit (3) in accordance with claim 8 or 9, and adapted to reduce at least one drift of the inertial unit (1), from a position drift, a velocity drift and an attitude drift, using results of measurement of the characteristic of the true state of the vehicle (20) which are delivered by the measuring system (2).

11. A vehicle (20), comprising a navigation system using measurement correlation (10) which is in accordance with claim 10.

FIG. 1

boîte_i   pour i = 1 à N

/1/ :  prédiction

/2/ :  mesure → /3/ :  contraction

/4/ :  mise à jour du poids $w_i$

CR

/5-1/ :  calcul de $n_i$

/5-2/ :  détermination de la coordonnée de division de boîte_i

/5/ {

/5-3/ :  division de boîte_i

/5-4/ :  lissage

# FIG. 2

FIG. 3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2018002932 A

- FR 2832796

**Littérature non-brevet citée dans la description**

- **DE MERLINGE, N ; DAHIA, K ; PIET-LAHANIER, H. ; BRUSEY, J ; HORRI, N.** «A Box Regularized Particle Filter for state estimation with severely ambiguous and non-linear measurements. *Automatica,* 2019, vol. 104, 102-110
- **DE MERLINGE, N. ; DAHIA, K. ; PIET-LAHANIER, H. ; BRUSEY, J. ; HORRI, N.** A Box Regularized Particle Filter for state estimation with severely ambiguous and non-linear measurements. *Automatica,* 2019, vol. 104, 102-110
- **DE MERLINGE et al.** *Automatica,* 2019, vol. 104

- **DE GNING, A. ; RISTIC, B. ; MIHAYLOVA, L. ; AB-DALLAH, F.** An introduction to box particle filtering [lecture notes. *IEEE Signal Processing Magazine,* 2013, vol. 30 (4), 166-171
- **DE MERLINGE, N. ; DAHIA, K ; PIET-LAHANIER, H. ; BRUSEY, J. ; HORRI, N.** A Box Regularized Particle Filter for state estimation with severely ambiguous and non-linear measurements. *Automatica,* 2019, vol. 104, 102-110
- **DE MERLINGE, N.** State estimation and trajectory planning using box particule kernels. Université Paris-Saclay, 2018
- **DE CHENG.** Generating beta variates with non-integral shape parameters. *Communications of the ACM,* 1978, vol. 21 (4), 317-322